# EUROPÄISCHE PATENTSCHRIFT

(11) **EP 0 633 643 B1**
(45) Veröffentlichungstag und Bekanntmachung des Hinweises auf die Patenterteilung: **29.01.1997**
(21) Anmeldenummer: 94109246.2
(22) Anmeldetag: 16.06.1994
(51) Int. Cl.: H02K 1/18

(54) **Horizontalachsige elektrische Maschine**
Electric machine with horizontal shaft
Machine électrique à axe horizontal

(30) Priorität: 05.07.1993 DE 4322268
(43) Veröffentlichungstag der Anmeldung: 11.01.1995
(73) Patentinhaber: ASEA BROWN BOVERI AG, 5401 Baden (CH)
(72) Erfinder: Zimmermann, Hans, CH-8617 Mönchaltorf (CH)

(56) Entgegenhaltungen:
- EP-A- 0 166 114
- DE-A- 3 920 785
- DE-A- 4 016 415
- DE-C- 903 121
- US-A- 2 973 442

## Beschreibung

### Technisches Gebiet

Die Erfindung bezieht sich auf eine horizontalachsige elektrische Maschine, wie sie im Oberbegriff des ersten Anspruchs beschrieben ist.

Die Erfindung nimmt dabei Bezug auf einen Stand der Technik, wie er sich beispielsweise aus der CH-PS 665 507 oder der US-PS 4,663,553 ergibt.

### TECHNOLOGISCHER HINTERGRUND UND STAND DER TECHNIK

Bei gasgekühlten elektrischen Maschinen des ganzen Leistungsbereichs treten grosse axiale und radiale Dehnungen im Statorblechkörper auf, welche auf das Gehäuse möglichst gleichmässig verteilt übertragen werden müssen.

Bei dem aus der CH-PS 665 507 bekannten luftgekühlten Turbogenerator erfolgt dies durch seitliches Aufhängen des Statorblechkörpers mittels parallel angeordneter, zu der Achse der elektrischen Maschine senkrechten und gegenseitig beabstandeten Tragringen. Um auftretende Schwingungen und thermische Spannungen während des Betriebszustandes der elektrischen Maschine möglichst klein zu halten, sind die Tragringe in zwei Bereichen ihrer vertikalen Symmetrieebene beidseits über vertikal geradlinig verlaufende Erweiterungen mittels Befestigungsteilen mit dem Gehäuseunterteil verbunden. Der weitaus grösste Teil des Umfangs der Tragplatten ist vom Gehäuseunter- und -oberteil beabstandet. Der Statorblechkörper ist durch über seinen ganzen Umfang gleichmässig verteilte Befestigungskeile in den Tragplatten verspannt. Die Befestigungsteile bestehen aus Befestigungsplatten, die jeweils mit den Erweiterungen der Tragplatten verschweisst sind, sowie aus horizontalachsigen Rohrstücken, welche sowohl mit den Befestigungsplatten als auch mit dem Gehäuseunterteil verschweisst sind. Diese Befestigung des Statorblechkörpers erlaubt eine einfache Montage, leichte Zugänglichkeit der zu verschweissenden Konstruktionsteile und gewährleistet eine gute Qualität der Schweissnähte.

Bei grossen luftgekühlten Turbogeneratoren werden die doppelfrequenten Blechkörperschwingungen und die daraus resultierenden Schallemissionen sehr gross. Mit zunehmender Maschinengrösse erhöhen sich aber auch die Beanspruchungen in den Bauteilen und Schweissnähten der Verbindungsstellen zum Gehäuse. Hieraus können sogenannte low-cycle fatigue Risse als Folge von Blechkörperschwingungen und thermischen Wechselbeanspruchungen der Start/Stop-Zyklen resultieren.

Aus der US-A-2973442 ist eine dynamoelektrische Maschine bekannt, deren Stator in einem inneren Rahmen angeordnet, wobei der innere Rahmen in einem äusseren Rahmen federnd befestigt ist. Der äussere Rahmen ist starr mit dem Maschinengehäuse verbunden und sowohl der innere wie auch der äussere Rahmen bestehen aus in Längsrichtung der Maschine ausgerichteten Trägerschienen, welche über dem Maschinenumfang verteilt sind. Zwischen dem inneren und dem äusseren Rahmen weisen beide Rahmen Rippenelemente auf, welche an geschichteten in Längsrichtung der Maschine ausgerichteten Blattfedern befestigt sind.

### KURZE DARSTELLUNG DER ERFINDUNG

Ausgehend vom Bekannten liegt der Erfindung die Aufgabe zugrunde, bei einer horizontalachsigen elektrischen Maschine der eingangs genannten Gattung eine schwingungs- und schallisolierte Aufhängung des Statorblechkörpers im Maschinengehäuse zu schaffen, die ohne aufwendige Feder- und/oder Abstützelemente auskommt und demgemäss einen einfachen und wirtschaftlichen Aufbau aufweist.

Diese Aufgabe wird gelöst durch die Merkmale des Anspruchs 1.

Die erfindungsgemässe Verbindung des Statorblechkörpers mit dem Gehäuseunterteil ergibt eine optimale Aufhängung, die allen Betriebsbeanspruchungen gerecht wird und ermöglicht eine schwingungs- und schallisolierte Blechkörperaufhängung. Die Konstruktion ist darüber hinaus auch wirtschaftlich.

Bei gasgekühlten elektrischen Maschinen ist der Ringraum zwischen Statorblechkörper und Gehäusemantel regelmässig in mehrere Kammern unterteilt, welche der Zu- und Abfuhr des Kühlgases dienen. Diese Räume werden durch Querwände oder Spanten gebildet, die am Innenumfang des Gehäuseunter- und Gehäuseoberteils befestigt sind. Die Spanten dienen gleichzeitig zur Versteifung des Gehäuses. Bei einer bevorzugten Weiterbildung der Erfindung sind nun diese Spanten zumindest im Gehäuseunterteil dadurch versteift, dass an ihrem inneren Umfang halbringförmige Verstärkungselemente angeschweisst oder angeschraubt sind. Diese Verstärkungselemente erhöhen das Trägheitsmoment der Spanten wirken daher ebenfalls schall- und schwingungsdämpfend. Gleichzeitig bieten diese Verstärkungsstücke die Möglichkeit, zusätzliche Schraubstellen für die Verbindung des Gehäuseoberteils mit dem Gehäuseunterteil zu schaffen, was einen weiteren Beitrag zur Erhöhung der Steifigkeit des Gehäuses und damit zur Schwingungsverminderung führt.

### KURZE BESCHREIBUNG DER ZEICHNUNG

In der Zeichnung, in der bevorzugte Ausführungsbeispiele der Erfindung dargesstellt sind, zeigt
- Fig.1: einen vereinfachten Querschnitt durch den Stator einer lüftgekühlten elektrischen Maschine auf der Höhe der Tragringe;
- Fig.1a: das Detail X aus Fig.1;
- Fig.2: einen teilweisen Längsschnitt durch den Statorunterteil der Maschine nach Fig.1;
- Fig.3: einen teilweisen Horizontalschnitt durch die horizontale Symmetriebene der elektrischen Maschine;
- Fig.4: eine Draufsicht auf eine Befestigungsstelle des Statorblechkörpers am Gehäuse;
- Fig.5: einen vereinfachten Querschnitt durch den Stator einer lüftgekühlten elektrischen Maschine auf der Höhe der Gehäusespanten;

### DETAILLIERTE BESCHREIBUNG DER ERFINDUNG

Der grundsätzliche Aufbau des luftgekühlten Turbogenerators entspricht weitgehend der aus der CH-PS 665 507 oder der US-PS 4,663,553 bekannten elektrischen Maschine.

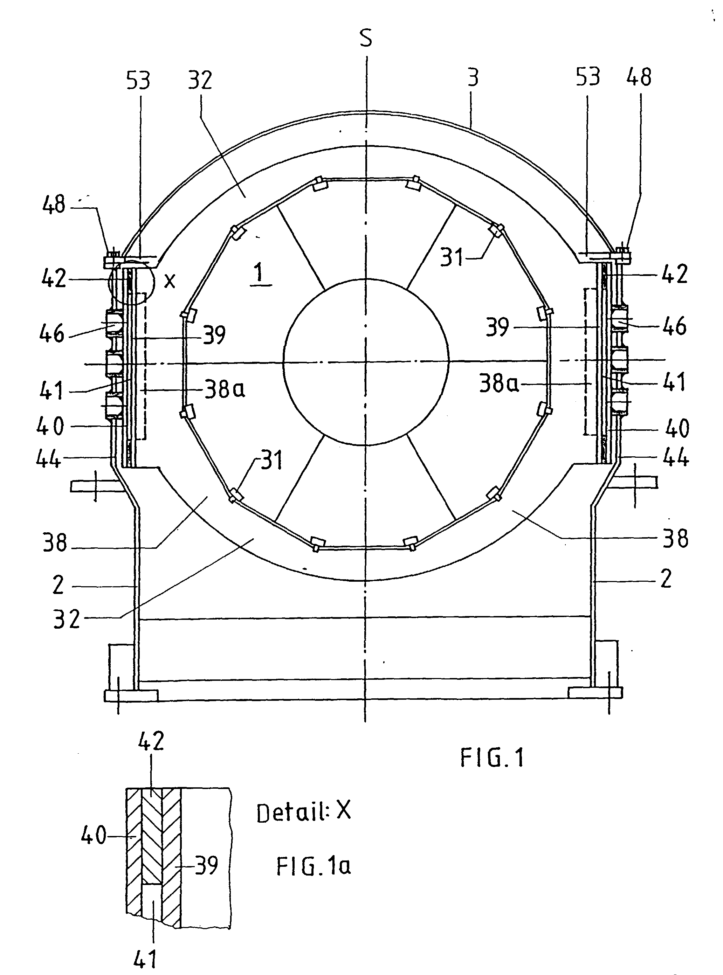

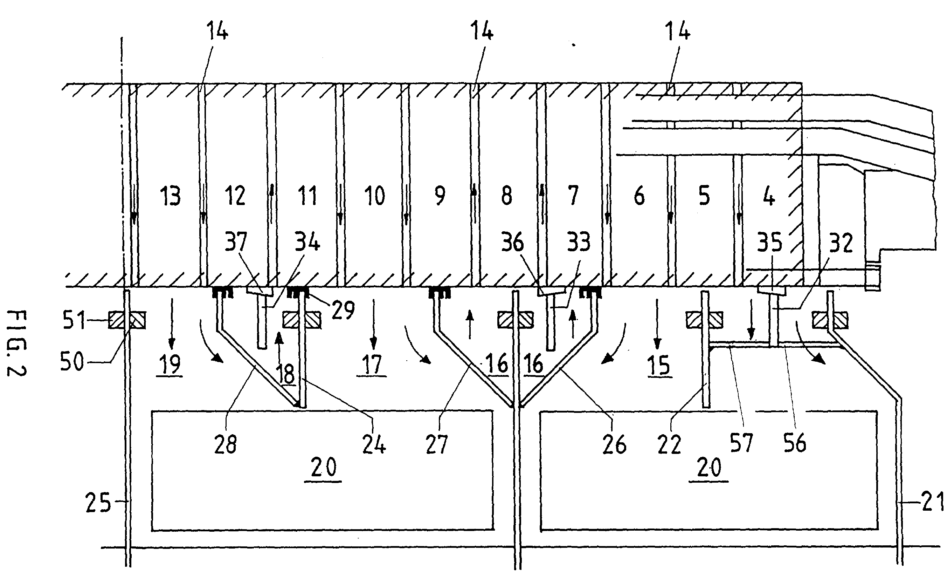

Im stark vereinfachten Querschnitt durch den Stator einer elektrischen Maschine gemäss Fig.1 bzw. dem teilweisen Längsschnitt durch den unteren Teil der Maschine gemäss Fig.2 ist ein Statorblechkörper 1 in einem zweiteiligen, horizontal geteilten Gehäuse mit einem Gehäuseunterteil 2 und einem Gehäuseoberteil 3 angeordnet. Der Statorblechkörper 1 besteht aus einzelnen Teilblechkörpern 4 bis 13, die axial voneinander distanziert ist. Durch diese Distanzen 14 strömt Kühlgas zu oder aus den Kammern 15 bis 19 im Raum zwischen Statorblechkörper 1 und Gehäusewand 2 bzw. 3. Die Kammern 15, 17 und 19 sind Heissgaskammern, in welche die erwärmte Kühlluft aus dem Stotorblechkörper 1 einströmt, und dann Kühlern 20 unterhalb der Maschine zugeführt zu werden. Die Kammern 16 und 18 sind Frischgaskammern, durch welche von den Kühlern 20 kommende Luft in die Distanzen 14 zwischen den Teilblechkörpern 4,5,..,13 geleitet wird. Diese Kammern sind gebildet durch Gehäusespanten 21 bis 25 und durch Trennbleche 26 bis 28, die an der Innenwand von Gehäuseunterteil 2 und Gehäuseoberteil 3 bzw. den Gehäusespanten befestigt sind. Dort wo die Gehäusespanten bzw. Trennbleche Heissgaskammern von Frischgaskammern trennen, sind die gegen den Blechkörper 1 weisenden Enden mit elastische Dichtungen 29 versehen.

Die Aufhängung/Befestigung des Statorblechkörper 1 im unteren Gehäuseteil 2 erfolgt in der selben Weise, wie es in EP-PS 0 166 114 oder der US-PS 4,663,553 beschrieben ist:

In Nuten sind sich über die gesamte Länge des Statorblechkörpers 1 erstreckende Pressbalken 31 eingelegt, die nach dem Zusammenpressen des Blechkörpers 1 mit diesem verschweisst werden. An diesen Pressbalken 31 wiederum sind jeweils Tragringe 32 bis 34 unter Zwischenschaltung von Befestigungskeilen 35 bis 37 befestigt.

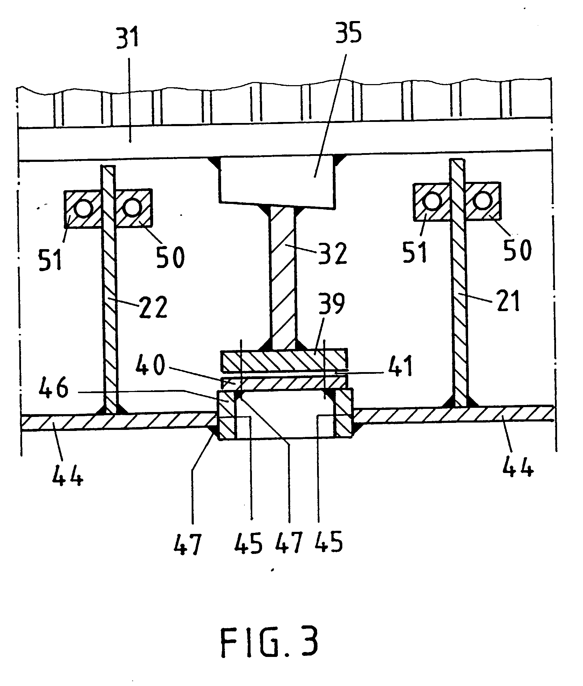

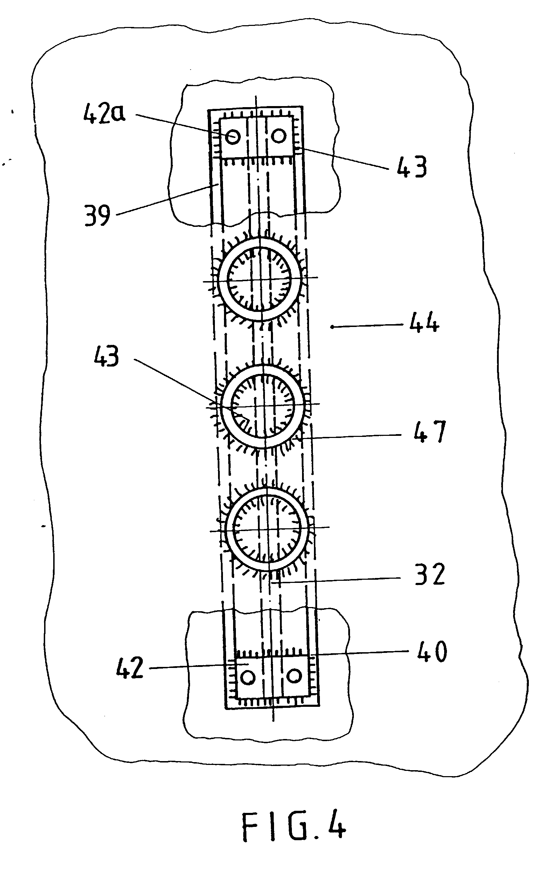

Wie aus Fig.1 und 3 zu erkennen ist, weisen die Tragringe 32,.. eine seitliche horizontale Erweiterung 38 auf, an die eine azimutal vertikal verlaufende Platte 39 angeschweisst ist. An dieser Platte 39 ist eine Befestigungsplatte 40 unter Belassung eines etwa 5 bis 10 mm grossen Spaltes 41 vorzugsweise durch Schweissen befestigt. Der Spalt 41 erstreckt sich im wesentlichen nur über den mittleren Abschnitt dieser Doppelplattenanordnung 39/40. Er ist dadurch gebildet, dass zwischen diese beiden Platten 39 und 40 an jedem Ende je eine Unterlage 42 mit einer Dicke, die der Spaltweite entspricht, eingeschoben ist, bevor die besagten Platten 39 und 40 mit dieser Unterlage randseitig verschweisst (Schweissnähnte 43 in Fig.4) werden. Schrauben 42a dienen als Montagehilfsmittel und zur Verstärkung der Schweissverbindung zwischen den beiden Platten 39 und 40.

Auf diese Weise kann die Befestigungsplatte 40 gegenüber der Platte 39 in ihrem mittleren Abschnitt Relativbewegungen ausführen; die Befestigungsplatte 40 kann als horizontal wirkende Blattfeder angesehen werden, in Umfangsrichtung und in Axialrichtung hingegen wirkt sie nicht als solche. Federweg und Federsteifigkeit dieser Blattfeder können durch deren Materialeigenschaften, Abmessungen (in Horizontal- und Vertikalrichtung) und dem Abstand zwischen den beiden Unterlagen 42 vorgegeben werden.

Eine weitere Möglichkeit, die Befestigungsplatte 40 gegenüber dem Tragring (in ihrem mittleren Abschnitt) federnd zu befestigen, besteht darin, die Befestigungsplatte 40 lediglich an ihrem oberen und unteren Ende mit dem Tragring 32 fest zu verbinden, derart, dass zwischen Tragring 32 und dem mittleren Abschnitt der Befestigungsplatte ein Spalt freibleibt. Zu diesem Zweck weist die vertikal verlaufende Kante der Erweiterung 38 ein Ausnehmung 38a (in Fig.1 strichliert eingetragen) auf.

Die eigentliche Befestigung des Statorblechkörpers 1 mitsamt seinen Tragringen 32,... und den daran befestigten Platten 39 und Befestigungsplatten 40 vollzieht sich nun in derselben Weise, wie es in der CH-PS 665 507 oder der US-PS 4,663,553 beschrieben und dargestellt ist:

Der Gehäuseunterteil 2 weist im Bereich der Tragringe vertikal verlaufende ebene Gehäuseabschnitte 44 auf, die horizontal und vertikal breiter sind als die Befestigungsplatten 40. Symmetrisch zu der durch die Tragringe 32,... definierten Ebene sind in dem besagten Gehäuseabschnitt 44 drei übereinanderliegende kreisrunde Bohrungen 45 angeordnet. Nachdem der Statorblechkörper 1 mitsamt seinen Tragringen in das Gehäuseunterteil 2 abgesenkt und ausgerichtet worden ist, werden in diese Bohrungen 45 kurze Rohrstücke 46 gesteckt, bis sie an der Befestigungsplatte 40 anliegen. Der Aussendurchmesser dieser Rohrstücke entspricht dabei dem Innendurchmesser der Bohrungen 45. Dann werden die Rohrstücke innen mit der Befestigungsplatte 40 und aussen mit dem besagten ebenen Gehäuseabschnitt 44 verschweisst (Schweissnähte 47). Die Anordnung und Verteilung der Rohrstücke 46 in vertikaler Richtung ist dabei so gewählt, dass alle Rohrstücke 46 im mittleren Abschnitt der Befestigungsplatte 40 zu liegen kommen und ein Abstand von etwa 200 bis 300 mm zwischen den beiden äusseren Rohrstücken und den inneren Enden der Unterlagen 42 bleibt. Nur so kann die Befestigungsplatte 40 die ihr zugewiesene Funktion einer Blattfeder erfüllen.

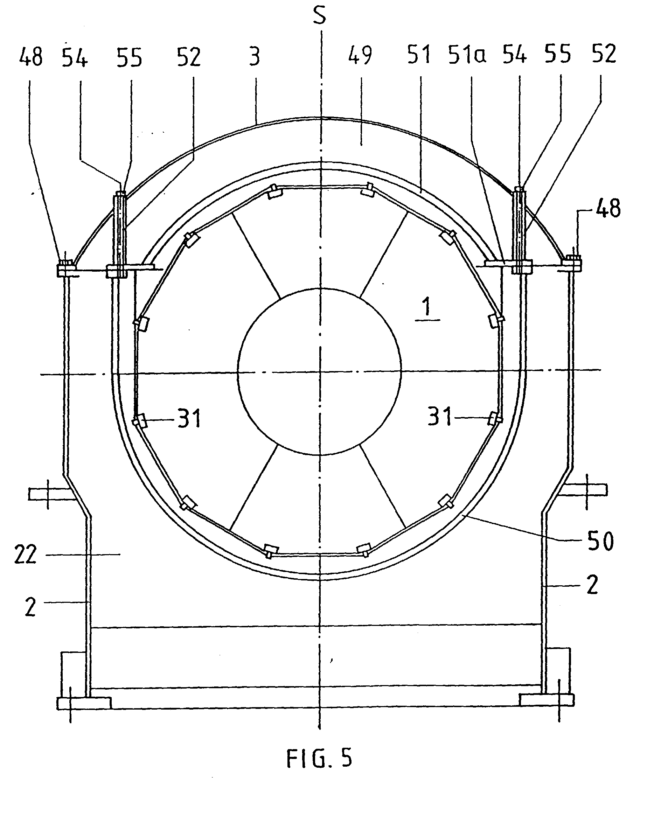

Danach wird das Gehäuseoberteil 3, der ebenfalls mit Gehäusespanten 49 (Fig.5) versehen ist, die neben der Versteifung des Gehäuseoberteils auch als Trennwände zwischen Heissgas- und Frischgaskammern dienen und aus diesem Grunde auf der selben axialen Höhe wie die Spanten 21,...,25 im unteren Gehäuseteil 2 liegen, aufgesetzt ist mit Gehäuseschrauben 48 mit dem Gehäuseunterteil 2 verschraubt.

Die technischen und wirtschaftlichen Vorteile der vorstehend beschriebenen Konstruktion(en) stellen sich zusammengefasst wie folgt dar:

Die Blechkörperaufhängung erfüllt die geforderte Festigkeit in Umfangsrichtung und aufgrund der seitlichen Erweiterungen 35,... an den Tragringen 32,... auch die geforderte Elastizität in Axialrichtung. Darüber hinaus ist das Gehäuse durch die Blattfedern (Befestigungsplatten 40) schwingungstechnisch und akkustisch vom Statorblechkörper entkoppelt. Weiterhin ist der Stator einfach und wirtschaftlich herzustellen. Hervorzuheben ist die "toleranzgerechte" Konstruktion. Insbesondere in radialer Richtung können praktisch beliebig grosse Toleranzen aufgenommen werden. Dies ist insbesondere wichtig, um Schweissungenauigkeiten ausgleichen zu können, ohne dass im Zuge der Herstellung aufwendige und teure Probemontagen nötig sind.

Eine wesentlicher Aspekt der oben aufgeführten schwingungsmässigen Entkopplung von Statorblechkörper 1 und Gehäuse ist die Steifigkeit des Gehäuses. Zwar wirken die oben angesprochenen Gehäusespanten 21,... und 49 versteifend; als Schwachstelle in diesem Sinne könnte jedoch die Trennstelle zwischen Gehäuseunterteil 2 und Gehäuseoberteil 3 angesehen werden. Eine Vergrösserung der Steifigkeit des gesamten Gehäuses lässt sich erzielen, wenn gemäss einer bevorzugten Weiterbildung der Erfindung nach Fig.5 die Gehäusespanten sowohl im unteren 2 als auch im oberen Gehäusteil 3 mit paarig angeordneten halbringartigen Verstärkungselementen 50 bzw. 51, z.B. Flacheisen, versehen werden, die seitlich an den radial innenliegenden Enden der Spanten befestigt, z.B. mit diesen verschweisst sind. Die Verstärkungselemente 50, 51 liegen vorzugsweise am radial innenliegenden Umfang der Gehäusespanten 32,..;49. Diese Massnahme erhöht das Trägheitsmoment der Spanten und letztlich damit die Steifigkeit der beiden Gehäusehälften 2 und 3. Die Verstärkungselemente 50 und 51 bieten darüber hinaus die Möglichkeit, zusätzliche Schraubstellen für die Verbindung der beiden Gehäusehälften anzubringen.

Zu diesem Zweck ist im Gehäuseoberteil 3 auf der axialen Höhe jedes Spants 49 ein vertikal verlaufendes Rohr 52 eingesetzt und mit ersterem verschweisst. Dieses Rohr reicht bis zur horizontalen Trennstelle 53 zwischen Gehäuseunter- und -oberteil. An den Spanten 21,... des Gehäuseunterteils 2 sind in den Stirnflächen der Verstärkungselemente 49 und 50 Gewindebohrungen 54 vorgesehen, in die Schraubenbolzen 55 geschraubt sind. Alternativ können auch Muttern an den Verstärkungselementen 50, 51 vorgesehen sein (nicht dargestellt).

Durch den Einsatz von Blattfedern ergibt sich - wie weiter oben ausgeführt - eine vergleichsweise "weiche" Aufhängung des Statorblechkörpers 1 im Gehäuse. Um nun zu verhindern, dass der Blechkörper nicht zu weich in den Blattfedern aufgehängt ist, sind unterhalb des Statorblechkörpers 1 und symmetrisch zur vertikalen Symmetrieebene S der Maschine die beiden äusseren Tragringe über horizontal verlaufende Schubplatten mit dem Gehäuseunterteil 2 verbunden. In Fig.2 sind diese Schubplatten mit den Bezugsziffern 56 bzw. 57 bezeichnet. Sie sind zum einen mit dem äusseren Tragring 32, zum anderen mit den Gehäusespanten 21 bzw. 22 verschweisst. Durch ihre horizontale Anordnung sind sie in vertikaler Richtung weich, in horizontaler Richtung (axial und lateral) hingegen steif. Auf diese Weise tragen sie zusätzlich zur Entkopplung des Statorblechkörpers vom Gehäuse bei.

### BEZEICHNUNGSLISTE

- 1: Statorblechkörper
- 2: Gehäuseunterteil
- 3: Gehäuseoberteil
- 4-13: Teilblechkörper
- 14: Distanzen zwischen 4,5;...
- 15,17,19: Heisgaskammern
- 16,18: Frischgaskammern
- 20: Kühler
- 21-25: Gehäusespanten
- 26-28: Trennbleche
- 29: elastische Dichtungen
- 31: Pressbalken
- 32-34: Tragringe
- 35-37: Befestigungskeile
- 38: horizontale Erweiterungen an 32,33,34
- 38a: Ausnehmung in 38
- 39: Platte
- 40: Befestigungsplatte
- 41: Spalt zwischen 39 und 40
- 42: Unterlage zwischen 39 und 40
- 42a: Befestigungsschrauben
- 43: Schweissnähte an 39,40,42
- 44: ebener, vertikaler Gehäuseabschnitt
- 45: Bohrungen in 44
- 46: Rohrstück
- 47: Schweissnähte an 46
- 48,55: Gehäuseschrauben
- 49: Gehäusespant in 3
- 50,51: Verstärkungselemente (Flacheisen)
- 52: Rohr
- 53: horizontale Trennstelle von 2 und 3
- 54: Gewindebohrung in 50 und 51
- 56,57: Schubplatten

## Patentansprüche

1. Horizontalachsige elektrische Maschine mit einem in einem horizontal geteilten, mit Gehäusespanten (21-25,49) versteiften Gehäuse (2,3) angeordneten Statorblechkörper (1), der mittels über an seinem Umfang verteilten Befestigungskeilen (35) in orthogonal zur Maschinenlängsachse angeordneten, gegenseitig beabstandeten Tragringen (32) verspannt ist, welche Tragringe an ihrem Aussenumfang über Befestigungsteile in radialer Richtung federnd mit dem Gehäuseunterteil (2) der Maschine verbunden sind, wobei die Befestigungsteile azimutale Befestigungsplatten (40) umfassen, die symmetrisch zur vertikalen Symmetrieebene der Maschine verlaufen, dadurch gekennzeichnet,
dass die Befestigungsplatten (40) an den besagten Tragringen (32) horizontal in radialer Richtung federnd befestigt sind, wobei die Befestigungsplatte (40) selbst als Blattfeder ausgebildet ist bzw. als solche wirkt, und
dass zwischen der Befestigungsplatte (40) und dem Tragring (32) eine parallel zur Befestigungsplatte (40) verlaufende Platte (39) vorgesehen ist, die mit dem Tragring (32) fest verbunden ist, und die in ihrem mittleren Abschnitt zwischen sich und der Befestigungsplatte (40) einen Spalt (41) freilässt.

2. Maschine nach Anspruch 1, dadurch gekennzeichnet, dass die Befestigungsplatte (40) lediglich an ihrem oberen und unteren Ende mit dem Tragring (32) fest verbunden ist, derart, dass zwischen Tragring (32) und dem mittleren Abschnitt der Befestigungsplatte ein Spalt (41a) freibleibt.

3. Maschine nach einem der Ansprüche 1 oder 2, dadurch gekennzeichnet, dass die Gehäusespanten (21,...,25) zumindest im Gehäuseunterteil (2) durch Verstärkungselemente (50,51) versteift sind, an denen vom Gehäuseoberteil her (3) Gehäuseschrauben (54) angreifen.

4. Maschine nach Anspruch 3, dadurch gekennzeichnet, dass die Gehäuseschrauben (54) durch vertikal verlaufende Rohre (52) geführt sind, die im Gehäuseoberteil (3) angeordnet sind, und bis zur horizontalen Trennstelle (53) des Gehäuses reichen.

5. Maschine nach einem der Ansprüche 1 bis 4, dadurch gekennzeichnet, dass unterhalb des Statorblechkörpers (1) und symmetrisch zur vertikalen Symmetrieebene (S) der Maschine zumindest die beiden äusseren Tragringe (32) über horizontal verlaufende Schubplatten (56,57) mit dem Gehäuseunterteil (2) verbunden sind.

## Claims

1. Horizontal-axis electrical machine having a stator laminate core (1) which is arranged in a housing (2, 3) which is split horizontally and is stiffened by housing formers (21-25, 49), which stator laminate core is clamped by means of fastening wedges (35), which are distributed over on [sic] its circumference, in supporting rings (32), which are arranged orthogonally to the machine longitudinal axis, are spaced apart from one another and are connected such that they are sprung in the radial direction, on their external circumference, via fastening parts, to the housing lower part (2) of the machine, the fastening parts comprising azimuthal fastening plates (40) which run symmetrically with respect to the vertical plane of symmetry of the machine, characterized in that the fastening plates (40) are fastened to the said supporting rings (32) such that they are sprung horizontally in the radial direction, the fastening plate (40) itself being constructed as a leaf spring, or acting as such, and in that a plate (39) is provided between the fastening plate (40) and the supporting ring (32), which plate runs parallel to the fastening plate (40), is firmly connected to the supporting ring (32) and, in its central section, leaves a gap (41) free between itself and the fastening plate (40).

2. Machine according to Claim 1, characterized in that the fastening plate (40) is firmly connected to the supporting ring (32) only at its upper end and lower end, in such a manner that a gap (41a) remains free between the supporting ring (32) and the central section of the fastening plate.

3. Machine according to either of Claims 1 or 2, characterized in that the housing formers (21, ..., 25) are stiffened, at least in the housing lower part (2), by reinforcing elements (50, 51) on which housing bolts (54) engage from the housing upper part (3).

4. Machine according to Claim 3, characterized in that the housing bolts (54) are guided through vertically running tubes (52) which are arranged in the housing upper part (3) and extend as far as the horizontal separating point (53) of the housing.

5. Machine according to one of Claims 1 to 4, characterized in that at least the two outer supporting rings (32) are connected to the housing lower part (2) via horizontally running thrust plates (56, 57), underneath the stator laminate core (1) and symmetrically with respect to the vertical plane of symmetry (5) of the machine.

## Revendications

1. Machine électrique à axe horizontal munie d'un corps en tôle du stator (1) disposé dans un boîtier (2, 3) séparé horizontalement par des membrures de boîtier (21-25, 49), lequel est serré au moyen d'anneaux porteurs (32) écartés réciproquement les uns des autres par le biais de cales de fixation (35) dans le sens orthogonal par rapport à l'axe longitudinal de la machine, lesquels anneaux porteurs sont reliés dans le sens radial par effet ressort à la partie inférieure (2) du boîtier au niveau de leur pourtour par le biais de pièces de fixation, les pièces de fixation comprenant des plaques de fixation (40) azimutales qui s'étendent symétriquement par rapport au plan de symétrie vertical de la machine, caractérisée par le fait que les plaques de fixation (40) sont fixées horizontalement avec effet ressort dans le sens radial sur lesdits anneaux porteurs (32), la plaque de fixation (40) elle-même étant configurée ou agissant comme un ressort à lames et qu'une plaque (39) s'étendant parallèlement à la plaque de fixation (40) est prévue entre la plaque de fixation (40) et l'anneau porteur (32), laquelle est fixée à demeure avec l'anneau porteur (32), et laquelle laisse une fente (41) libre au niveau de sa portion centrale entre elle-même et la plaque de fixation (40).

2. Machine selon la revendication 1, caractérisée par le fait que la plaque de fixation (40) est uniquement fixée à demeure avec l'anneau porteur (32) au niveau de ses extrémités supérieure et inférieure de façon à ce qu'il reste une fente (41a) libre entre l'anneau porteur (32) et la portion centrale de la plaque de fixation.

3. Machine selon l'une des revendications 1 ou 2, caractérisée par le fait que les membrures (21, ..., 25) du boîtier sont rigidifiés au moins dans la partie inférieure (2) du boîtier par des éléments de renforcement (50, 51) sur lesquels viennent prendre des vis de boîtier (54) à partir de la partie supérieure (3) du boîtier.

4. Machine selon la revendication 3, caractérisée par le fait que les vis de boîtier (54) sont guidées par des tubes verticaux (52), lesquels sont disposés dans la partie supérieure (3) du boîtier et s'étendent jusqu'au point de séparation (53) horizontal du boîtier.

5. Machine selon l'une des revendications 1 à 4, caractérisée par le fait qu'au moins les deux anneaux porteurs (32) extérieurs sont reliés à la partie inférieure (2) du boîtier par le biais de plaques coulissantes (56, 57) s'étendant horizontalement sous le corps en tôle du stator (1) et symétriques au plan de symétrie vertical (S) de la machine.
